Europäisches Patentamt

European Patent Office

Office européen des brevets

(11) Veröffentlichungsnummer: **0 264 518**
A1

## (12) EUROPÄISCHE PATENTANMELDUNG

(21) Anmeldenummer: 86890339.4

(22) Anmeldetag: 16.12.86

(51) Int.Cl.³: **G 03 B 23/02**

(30) Priorität: 15.10.86 AT 2739/86

(43) Veröffentlichungstag der Anmeldung:
27.04.88 Patentblatt 88/17

(84) Benannte Vertragsstaaten:
BE CH DE ES FR GB GR IT LI LU NL SE

(71) Anmelder: Thompson, Elmer Otis, Jr.
5909 Marilyn Drive
Knoxville Tennessee 37914(US)

(72) Erfinder: Thompson, Elmer Otis, Jr.
5909 Marilyn Drive
Knoxville Tennessee 37914(US)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher Spittelwiese
7
A-4020 Linz(AT)

(54) Sichtpackung für Fotobilder.

(57) Bei einer Sichtpackung für Fotobilder aus einem Außenkasten (1), einem Schieber (2) und einer Wechselvorrichtung
für die Bilder eines in der Packung enthaltenen Stapels (25),
mit einer Abziehvorrichtung (28) für das jewseils oberste Bild
des Stapels beim Ausziehen des Bildes und einer Umleitvorrichtung, die das abgezogene Bild beim neuerlichen
Einschieben des Schiebers zur anderen Seite des
Bilderstapels (25) leitet, besteht die Abziehvorrichtung der
zum Fenster (5) weisenden Stapelseite zugeordnet aus einem
am Ausziehende des Kastens um die Dicke eines Bildes vorstehenden Anschlag (28) und der Schieber (2) trägt an seinem
in den Kasten (1) ragenden Ende eine feststehend angeformte, über seinen Stapelaufnahmebereich vorragende
Aufnahmevorrichtung (20, 21, 24), mit der er ein vorher abgezogenes, sich wegen der Bildquerwölbung von der Abziehvorrichtung abfederndes und zu Boden fallendes Bild
aufnimmt und unter den in ihm enthaltenen Stapel (25) leitet.

FIG.6

## Sichtpackung für Fotobilder

Die Erfindung betrifft eine Sichtpackung für Fotobilder, mit einem Behälter aus einem Außenkasten und einem aus diesem ausziehbaren Schieber, der einen Bilderstapel aufnimmt, wobei der Außenkasten ein Sichtfenster für das bei eingeschobenem Schieber oberste Bild aufweist und mit einer Abziehvorrichtung zum einzelnen Abziehen eines Bildes vom Stapel beim Ausziehen des Schiebers ausgestattet ist und eine Umleitvorrichtung vorgesehen ist, die das abgezogene Bild beim folgenden Einschieben des Schiebers zur anderen Seite des Stapels leitet.

Sichtpackungen dieser grundsätzlichen Bauart sind aus der DE-AS 27 45 214, der DE-PS 30 14 394 und der EU-A-0 113 057 bekannt geworden. Sie können entweder als einfache Verpackung der Fotobilder dienen, aber auch als Bilderrahmen bzw. in Kombination mit Diaprojektoren Verwendung finden. Es ist mit solchen Sichtpackungen möglich, die einzelnen Bilder des Bilderstapels nacheinander abzuziehen, so daß das am Fenster sichtbare Bild gewechselt wird und alle Bilder des Stapels angesehen werden können, ohne daß sie dabei unmittelbar mit der Hand berührt werden. Die geordnete Reihenfolge der Bilder des Bilderstapels bleibt erhalten.

Die bisher bekannten Sichtpackungen der gegenständlichen Art besitzen einen sehr komplizierten, aufwendigen Aufbau mit vielen mechanisch, meist durch Federn bewegten Teilen, wobei die einzelnen Bewegungsvorgänge und auch die von den Federn erzeugten Kräfte richtig abzustimmen sind. Es kommen hier immer wieder Bedienungsfehler vor, die die Funktion beeinträchtigen. Überdies können mit den Bildern zusammenwirkende relativ zum Schieber bzw. Kasten bewegliche Teile, die nur mit kleinen Flächen der Bilder in Eingriff kommen, Beschädigungen dieser Bilder, beispielsweise Kratzstreifen, hervorrufen.

Alle bekannten Vorrichtungen der eingangs genannten Art sehen die Abziehvorrichtung im Bodenbereich des Kastens vor. Zu diesem Zweck muß der Schieber selbst in seinem der Abstützung des Bilderstapels dienenden Bodenbereich durchgehende Längsschlitze aufweisen, durch die hindurch am Boden des Kastens angebrachte Abziehvorrichtungen mit dem jerweils untersten Bild des Stapels in Eingriff kommen können. Eine bekannte Abziehvorrichtung besitzt hier einen um die Bilddicke über die Auflagefläche des Schieberbodens durch die genannte Öffnung des Schiebers einragenden Queranschlag, der beim Ausziehen des Schiebers das unterste Bild im Kasten festhält. Andere Abziehvorrichtungen sehen durch die Öffnungen des Schieberbodens eingreifende, beim Ausziehen des Schiebers in ihrer Drehung angehaltene Walzen mit einem einen hohen Reibungsbeiwert aufweisenden Mantel vor. Beim Ausziehen des Schiebers werden am Kastenboden angebrachte Federn oder federnd über dem Kastenboden ausschwenkbare Klappen freigegeben, die das abgezogene Bild bis zum Fenster anheben. Beim neuerlichen Einführen des Schiebers lenken der Stapelaufnahme des Schiebers voreilende Leitstücke das Bild auf die Oberseite des Stapels, so daß es nun lagerichtig durch das Fenster sichtbar ist. Es sind hier auch Konstruktionen bekannt, die in der letztgenannten Stellung des Schiebers Stützfedern für den Schieberboden aktivieren, so daß der Boden den gesamten Bilderstapel gegen die Fensterwand des Kastens drückt.

Aufgabe der Erfindung ist die Schaffung einer Sichtpackung der eingangs genannten Art, die einfach herstellbar ist, eine hohe Betriebssicherheit aufweist und bei der auch ein weitgehender Schutz der Bilder vor Beschädigungen, insbesondere vor einem Zerkratzen oder einem Abrieb, ge-

0264518

geben ist.

Die gestellte Aufgabe wird prinzipiell dadurch gelöst, daß die Abziehvorrichtung der zum Fenster weisenden Stapelseite zugeordnet ist und, wie an sich bekannt, einen am Ausziehende des Kastens quer zur Ausziehrichtung maximal um die Dicke des Bildes vorstehenden Anschlag umfaßt und daß der mit Randanschlägen oder Leitwänden für die Seiten des Bilderstapel versehene Schieber an seinem in den Kasten ragenden Ende einen über den Stapelaufnahmebereich vorragenden, feststehenden Aufnehmer trägt, der mit dem Schieber über eine dem Fenster gegenüber angebrachte Bildauflagefläche des Kastens verstellbar ist und beim Einschieben des Schiebers das vorher abgezogene, bei nach oben weisendem Fenster auf die Bildauflagefläche abgesetzte und sich mit dem hinteren Querrand im Kasten abstützende Bild aufnimmt und unter den Stapel leitet.

Eine Grundüberlegung der Erfindung besteht darin, daß die Anhebefedern oder Klappen der bisher bekannten Sichtpackungen einfach vermieden werden können, wenn man die bisher übliche Funktion umkehrt und jeweils das oberste Bild des Stapels abzieht. Bei der üblichen Gebrauchshaltung mit nach oben weisendem Bild, worunter auch eine entsprechende Schräghaltung zu verstehen ist, wird das abgezogene Bild im Kasten zu Boden fallen und sich so von selbst der Unterseite des Stapels zuordnen. Eine weitere Überlegung die der Erfindung zugrundliegt besteht darin, daß Fotobilder praktisch immer das Bestreben zeigen, eine zur Bildseite konvexe Querwölbung anzunehmen bzw. durch einfaches Zusammendrücken des Bilderstapels von den Längsrändern her vor dem Einlegen in den Schieber leicht entsprechend vorgeformt werden können. Durch die vorhandene oder aufgezwungene Querwölbung wird die Längssteifigkeit des Bildes erhöht und eine Längswölbung ausgeschlossen. Beim Abziehen bzw. Abschieben des obersten Bildes wird durch das Zurückfedern des Einzelbildes ein sicherer Abwurf vom Fenster des Kastens gewährleistet. Wegen des Wölbungsbestrebens der Bilder ist die Anzahl der im Stapel befindlichen Bilder nicht kritisch, d.h. ein für eine gegebene Bilderanzahl ausgelegter Schieber kann einige Bilder mehr oder weniger aufnehmen, wobei sich durch stärkere oder schwächere Wölbung der Einzelbilder die Stapelhöhe selbsttätig auf die zur Verfügung stehende Höhe einstellen wird, so daß das oberste Bild sicher von der Abziehvorrichtung erreicht wird. Werden viel zu wenig Bilder eingelegt, kann man bei nach unten weisendem Fenster abziehen und dann die Packung wieder in die übliche Gebrauchslage umdrehen, wobei das abgezogene Bild wieder nach unten fällt und unter den Stapel eingeschoben werden kann. Schließlich erleichtert das Bestreben der Bilder, eine leicht gewölbte Lage einzunehmen, auch das Aufnehmen des Bildes mit Hilfe des erwähnten Aufnehmers, der, wie noch näher erläutert werden wird, ein starrer Teil sein kann. Damit ergibt sich eine äußerst einfache und funktionssichere Gesamtkonstruktion der Sichtpackung insbesondere bei der Abziehvorrichtung und beim Aufnehmer.

Nach einer bevorzugten Ausführung ist der leistenförmig ausgebildete Abziehanschlag an einem unter der das Fenster aufnehmenden Kastenoberseite angebrachten, an dem vom Ausziehende des Kastens abweisenden Ende schwenkbar oder federnd abgestützt gelagerten, platten- oder rahmenförmigen Niederhalter für die Oberseite des Bilderstapels vorgesehen, welcher Niederhalter einen Fensterausschnitt aufweist bzw. den durchsichtigen Fensterteil bildet.

Durch die Verwendung dieses Niederhalters wird zunächst das jeweils oberste Bild in genügendem Abstand von der Kastenoberseite und vom Fenster festgehalten. Der Niederhalter kann auch gleich einem Zierrahmen für das jeweils oberste Bild darstellen, so daß der Bilder- bzw. Stapelrand durch das Fenster unsichtbar bleibt .Die Hauptaufgabe des Niederhalters besteht jedoch darin, einen Ausgleich bei verschiedener Bilderanzahl im Stapel bzw. verschiedenen Federeigenschaften der Bilder zu schaffen und

- 5 -                                    0264518

zu gewährleisten, daß auch bei geringfügigen Verschiedenheiten der Stapelhöhe das oberste Bild vom Anschlag erfaßt wird.

Um bei eingeschobenem Schieber den Niederhalter zu
stabilisieren, kann am Ausziehende des Schiebers ein Griffstück angebracht sein, das einen Einführschlitz od.dgl. zur
Aufnahme und Fixierung des Endes des Niederhalters bei in
den Kasten eingeschobenem Schieber aufweist.

Es ist möglich, für das abgezogene Bild über dem
Kastenboden nur Auflagen für die Seitenränder vorzusehen, so
daß das Bild durch einen untergreifenden Teil des Schiebers
aufgenommen werden kann. Unter Ausnützung der Querwölbung
der Bilder wird jedoch eine Konstruktion bevorzugt, bei der
der Aufnehmer von einem über den flach ausgebildeten Kastenboden verschiebbaren, zungenartigen Vorsprung des Schieberbodens gebildet ist, der eine zur Auflagefläche des
Schieberbodens für den Bilderstapel ansteigende Keilfläche aufweist und dem am Einführende des Schiebers von den
Schieberseitenwänden  vorragende Leitstücke zugeordnet sind,
die die Querseite des Bilderstapels begrenzen und zwischen
deren Unterseiten und dem Kasten- bzw. Schieberboden Einführschlitze für die Seitenränder des aufgenommenen Bildes
freigelassen sind. Die Keilfläche reicht zweckmäßig noch
unter den vorderen Stapelrand hinein, wodurch durch das Einschieben des Bildes unter den Stapel erleichtert wird.

Die abgezogenen Einzelbilder können unterschiedliche
Querwölbungen aufweisen. Es empfiehlt sich, die Bilder im
möglichst flachgerichteten Zustand unter den Stapel einzuschieben. Für die entsprechende Ausrichtung können der zungenartige Vorsprung und die Leitstücke im Zusammenwirken
eingesetzt werden. Damit auch stärker gewölbte Bilder sicher
eingefädelt und flachgerichtet werden, können die
Unterseiten der Leitstücke gegensinnig zum zungenartigen
Vorsprung des Schieberbodens abgeschrägt sein, so daß
trichterartige Einlässe entstehen und diese Unterseiten der
Leitstücke mit Randstücken der Zunge je einen an der engsten Stelle etwa Bilddicke aufweisenden Einlaßspalt bestimmen.

Damit ein quergewölbtes Bild ausreichend Spielraum hat, wenn es aus einer gewölbten in eine flachgestellte Stellung geleitet wird, kann der zungenartige Vorsprung zwischen einem breiten Mittelstück und den Randstücken Ausschnitte aufweisen, so daß das Bild vom Aufnehmer nur in der Mitte und an den Rändern unterstützt und geleitet und von den Leitstücken beim Eintritt in den Spalt flachgestellt wird.

Die Leistücke können eine Doppelfunktion erfüllen und auch nach oben gerichtete Leitflächen aufweisen, die mit dem Niederhalter Randführungen für das abgezogene Bild und zugleich Anschläge zur Begrenzung der Schwenkbewegung des Niederhalters bilden.

Schließlich wird zur Erzielung einer glatten einfachen Außenform des Kastens vorgesehen, daß das vom Ausziehende des Kastens abweisende Kastenende in bzw. an der entsprechenden Wandung einen Anschlag für den hinteren Rand des abgezogenen Bildes bei dessen Eingriff mit dem Aufnehmer und Ausnehmungen zur versenkten Aufnahme dieses aus dem zungenartigen Vorsprung bestehenden Aufnehmers und der Leitstücke aufweist.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen

Fig. 1 eine erfindungsgemäße Sichtpackung schematisiert in Draufsicht,

Fig. 2 die Packung nach Fig. 1 bei abgenommener Decke,

Fig. 3 einen weiteren, parallel zum Boden des Kastens geführten Schnitt unterhalb des Niederhalters,

Fig. 4 einen Querschnitt nach der Linie IV-IV der Fig. 1,

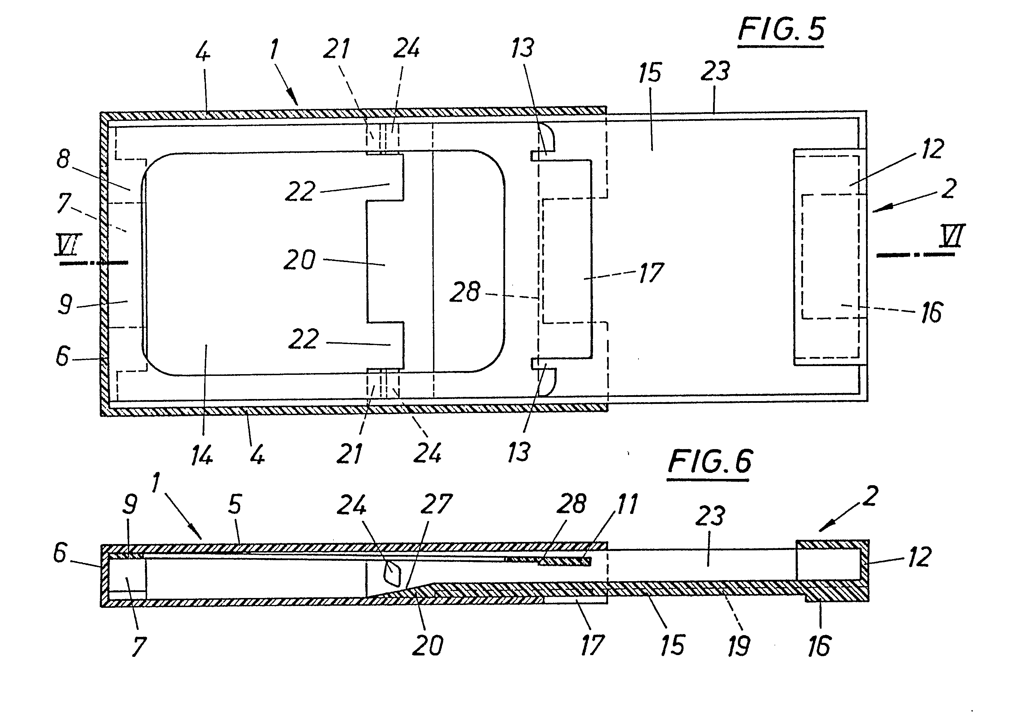

Fig. 5 in der Fig. 2 entsprechender Darstellungsweise die Packung bei teilweise ausgeschobenem Schieber,

Fig. 6 einen Schnitt nach der Linie VI-VI der Fig. 5,

Fig. 7 in größerem Maßstab einen weiteren Querschnitt
bei teilweise ausgezogenem Schieber, wobei der
Bilderstapel eingezeichnet wurde und die

Fig. 8 und 9 ebenfalls im größeren Maßstab Teillängsschnitte
zur Erläuterung des Abzieh- bzw. Aufnahmevorganges
eines Bildes.

Die Sichtpackung besitzt einen Außenkasten 1 und
einen in diesem der Länge nach ausziehbar geführten Schieber
2. Beide Teile werden vorzugsweise aus Kunststoff-Spritzgußteilen gebildet. Der Außenkasten 1 besitzt einen Boden 3,
Seitenwände 4, eine aus dichsichtigem Material gefertigte
Decke 5 und gegenüber dem Ausziehende des Schiebers 2 eine
Abschlußwand 6, an die ein Vorsprung 7 angeformt ist. Unterhalb der Decke 5 ist an dem erwähnten Vorsprung 7 ein beim
Ausführungsbeispiel rahmenförmiger Niederhalter 8 mit dem
einen Längsende 9 begrenzt schwenkbar oder mit dem freien
Ende 10 nach unten federnd befestigt. Für diese Befestigung
kann im Vorsprung 7 ein Lager angebracht werden. Es ist aber
auch möglich, den Niederhalter 8 einfach mit Haltezapfen zu
befestigen. Am freien Ende 10 des Niederhalters 8 ist ein
Vorsprung 11 vorgesehen, der bei eingeschobenem Schieber in
ein zum Kasten hin offenes Griffstück 12 des Schiebers 2
eingreift, wobei links und rechts des Vorsprunges 11 kurze
Schlitze 13 vorhanden sind, in die die Seitenwände des
Griffstückes 12 eingreifen.

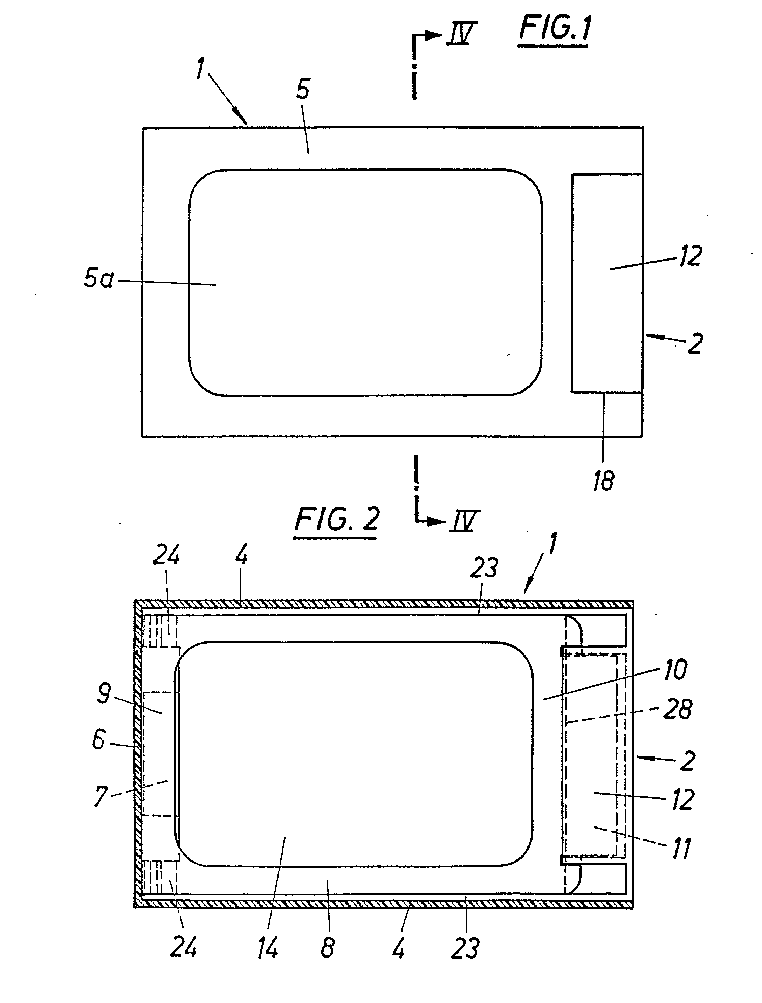

Fig. 1 zeigt eine Ausführungsform, bei der die
Kastendecke 5 von einem rahmenförmigen, undurchsichtigen
Außenteil und einem eingesetzten durchsichtigen Fensterteil
5a gebildet ist, wobei der Rahmenausschnitt 14 des Niederhalters 8 dem erwähnten Fenster 5a entspricht. Der Boden 3
des Kastens 1 ist hier flach ausgebildet.

Der Schieber 2 weist das erwähnte Griffstück 12 auf.
Sein Boden 15 ist zum Griffstück 12 abgesetzt, wobei der
Unterteil 16 des Griffstückes für den Eingriff in eine Ausnehmung 17 des Kastenbodens 3 und der Oberteil des Griffstückes 12 für den Eingriff in eine entsprechende Ausnehmung 18 der Kastendecke 5 bestimmt ist. In den Boden 15 können parallele Längsnuten 19 eingearbeitet sein. Das in den Kasten hineinweisende Ende des Schieberbodens 15 ist mit einem Vorsprung 20 versehen, der bei eingeschobenem Schieber unter den Teil 7 eingreift und hier versenkt ist. Dieser Vorsprung besitzt zwischen einem breiten Mittelstück 20 und Randstücken 21 Ausschnitte 22. Der Schieber 2 ist ferner mit Seitenwänden 23 versehen, die bei eingeschobenem Schieber 2 bis zur Wand 6 reichen und nach innen gerichtete Leitstücke 24 tragen, welche in der Seitenansicht gesehen, die Grundform rhombischer Prismen aufweisen, so daß ihre Oberseite mit dem Niederhalter 8 einen sich zum Ausziehende öffnenden Keilspalt und ihre Unterseite mit der entsprechenden Keilfläche der Randstücke 21 einen sich nach der Einschiebeseite öffnenden Keilspalt einschließt. Die zum Griffstück 12 weisende Seite der Leitstücke 24 bildet eine Begrenzung für die Querseite eines vom Schieber 2 aufzunehmenden Bilderstapels 25, für den die Seitenwände 23 Seitenführungen und die Stirnseite des Griffstückes 12 eine Begrenzung für die andere Querseite darstellt. Die Leitstücke 24 werden bei eingeschobenem Schieber 2 in Ausschnitten 26 beidseits des Vorsprunges 7 aufgenommen. Die Keilfläche 27 der Zunge 20 greift unter diesen Vorsprung 7 ein.

An der Unterseite des Niederhalters 8 ist in der Nähe des Endes 11 ein leistenförmiger, höchstens die Dicke eines Einzelbildes aufweisender Abziehanschlag 28 vorgesehen.

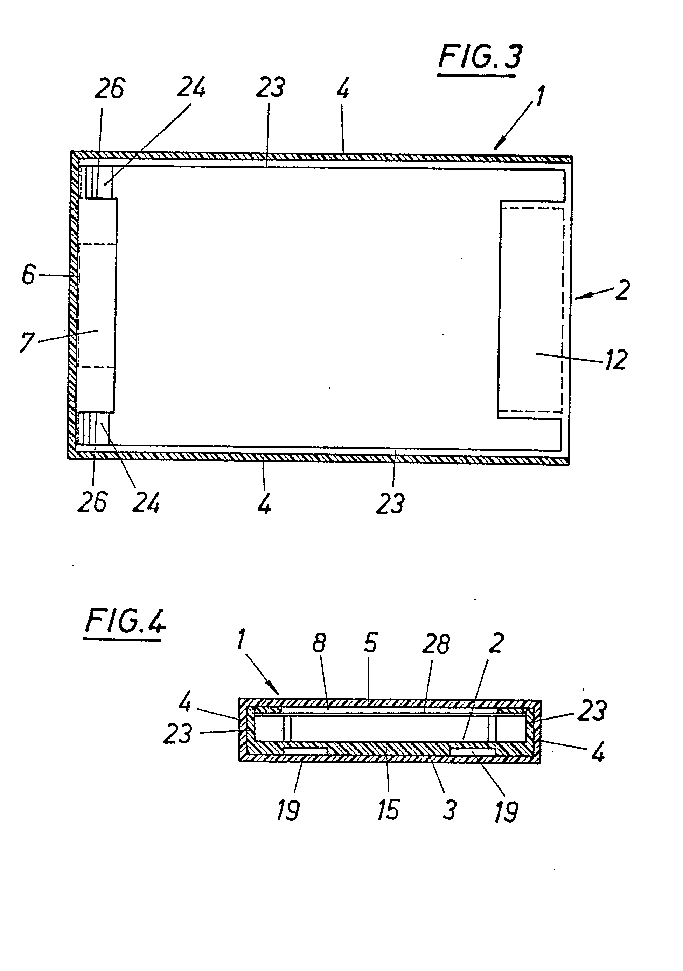

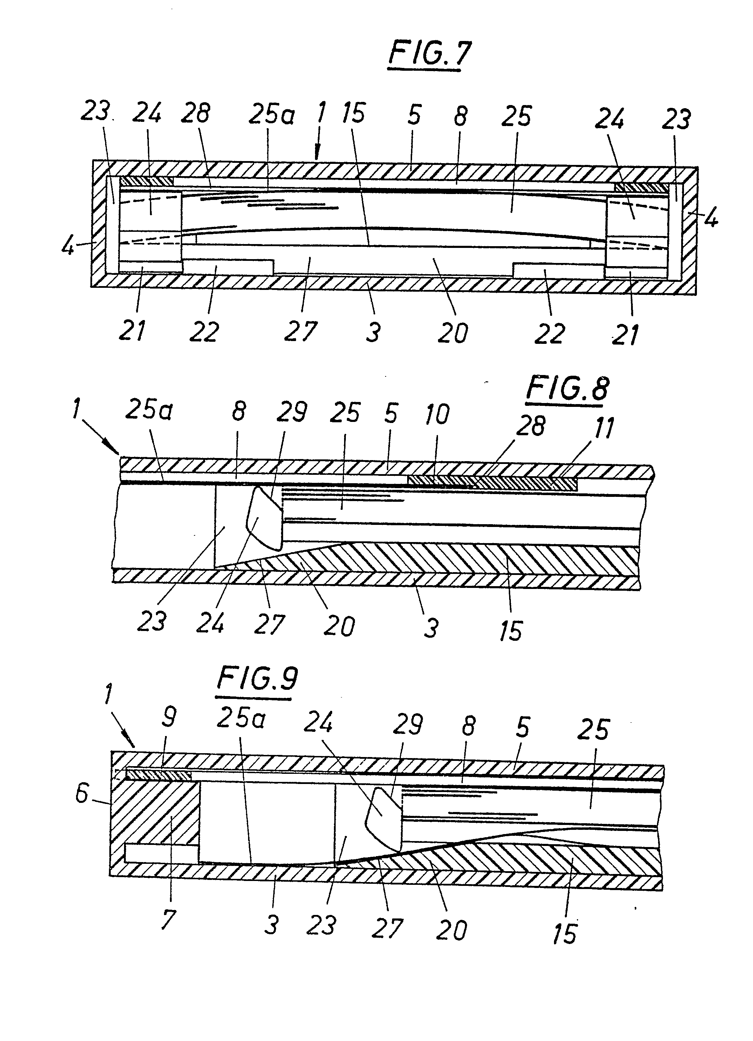

Beim Gebrauch wird in den erwähnten Aufnahmeraum des Schiebers 2 ein Bilderstapel 25 eingelegt und der Schieber wird in die Stellung nach den Fig. 1 bis 4 bzw. 7 verbracht. Das oberste Bild 25a des Stapels (Fig. 7) ist durch das Fenster 5a und den Ausschnitt 14 sichtbar. Die Leitstücke 24 befinden sich in ihrer versenkten Ruhelage beidseits des Teiles 7. Der Stapel wird in dieser eingeschobenen Stellung von der Innenseite des Teiles 7 leicht gegenüber den Führungsflächen der Teile 24 weggedrückt. Die Bilder nehmen von Haus aus oder durch entsprechende Vorformung eine leichte Querwölbung ein. Der Niederhalter 8 drückt durch seine Vorspannnung bzw. schwenkbare Lagerung leicht auf das oberste Bild 25a.

Wird nun der Schieber 2 herausgezogen, so schlägt das oberste Bild 25a (Fig. 8) an den leistenförmigen Abziehananschlag 28 an. Bei einer Weiterverstellung des Schiebers 2 wird dieses Bild vom Stapel 25 abgezogen, wobei seine Seitenränder vom hinteren Randbereich ausgehend über die oberen, schrägen Leitflächen 29 der Leitstücke 24 nach oben gedrückt werden. Dadurch wird das abgezogene Bild 25a flach gehalten. Ferner ist mit einfachsten Mitteln eine Fehlbetätigung verhindert. Wird der Schieber 2 nicht voll ausgezogen, so bleibt das erst teilweise abgezogene Bild 25a in der Relativstellung zum Stapel 25. Wird der Schieber 2 dann wieder eingeschoben, so kann sich das Bild 25a unter Anlage an der Innenseite des Teiles 7 wieder oben über den Stapel zurückschieben. Nur wenn der Schieber 2 voll ausgezogen wird, so daß die Leitstücke 24 mit dem Scheitelpunkt der Leitfläche 29 über den Abziehanschlag 28 hinwegtreten, ist das Bild 25a vollkommen freigegeben und fällt auf den Boden 3 des Kastens 1. Die Scheitelbereiche der Leitstücke 24 bleiben mit den Seitenteilen des Niederhalters 8 weiterhin in Eingriff. Nach dem Abwerfen des abgezogenen Bildes 25a auf den Boden 3 kann der Schieber 2 wieder eingeschoben werden. Dabei kommen zuerst die Mittelzunge 20 und die Randstücke 21 mit ihren oberseitigen Keilflächen 27 mit dem abgeworfenen Bild 25a (siehe Fig. 9) in Eingriff und schieben dieses in Anschlagstellung mit dem Teil 7. Der schieberseitige Rand des Bildes 25a wird angehoben und das Bild wird über die Unterseiten der Leitstücke 24 schließlich durch die engste Stelle des Keilspaltes hindurchgeleitet. Dabei wird durch das Zusammenwirken der Teile 20, 21 und 24 das Bild aus seinem natürlichen oder aufgezwungenen Querwölbung flachgerichtet und tritt unter den Bilderstapel 25 ein, da die Keilfläche 27 bis unter die Auflage des Bilder-

0264518

stapels 25 hineinreicht. Beim Weiterschieben wird das Bild 25a unter den Bilderstapel 25 eingeschoben, so daß das Bild 25a bei voll eingeschobenem Schieber 2 unten im Stapel 25 liegt und dessen nun oberstes Bild durch das Fensters 5a betrachtet werden kann.

Patentansprüche:

1. Sichtpackung für Fotobilder, mit einem Behälter aus einem Außenkasten (1) und einem aus diesem ausziehbaren Schieber (2), der einen Bilderstapel (25) aufnimmt, wobei der Außenkasten (1) ein Sichtfenster (5) für das bei eingeschobenem Schieber oberste Bild (25a) aufweist und mit einer Abziehvorrichtung (28) zum einzelnen Abziehen eines Bildes vom Stapel beim Ausziehen des Schiebers (2) ausgestattet ist und eine Umleitvorrichtung vorgesehen ist, die das abgezogene Bild beim folgenden Einschieben des Schiebers zur anderen Seite des Stapels leitet, dadurch gekennzeichnet, daß die Abziehvorrichtung der zum Fenster (5a) weisenden Stapelseite zugeordnet ist und einen am Ausziehende des Kastens quer zur Ausziehrichtung maximal um die Dicke eines Bildes vorstehenden Anschlag (28) umfaßt, und daß der mit Randanschlägen oder Leitwänden (23) für die Seiten des Bilderstapels (25) versehene Schieber (2) an seinem in den Kasten (1) ragenden Ende einen über den Stapelaufnahmebereich vorragenden, feststehenden Aufnehmer (20) trägt, der mit dem Schieber über eine dem Fenster (5) gegenüber angebrachte Bildauflagefläche (3) des Kastens verstellbar ist und beim Einschieben des Schiebers das vorher abgezogene, bei nach oben weisendem Fenster auf die Bildauflagefläche abgesetzte und sich mit dem hinteren Querrand im Kasten abstützende Bild (25a) aufnimmt und unter den Stapel leitet.

2. Sichtpackung nach Anspruch 1, dadurch gekennzeichnet, daß der leistenförmig ausgebildete Abziehanschlag (28) an einem unter der das Fenster (5a) aufnehmenden Kastenoberseite angebrachten, an dem vom Ausziehende des Kastens (1) abweisenden Ende schwenkbar oder federnd abgestützt gelagerten, plattenförmigen oder rahmenförmigen Niederhalter (8) für die Oberseite des Bilderstapels vorgesehen ist, welcher Niederhalter einen Fensterausschnitt (14) aufweist bzw.

den durchsichtigen Fensterteil bildet.

3.     Sichtpackung nach Anspruch 1 oder 2, dadurch gekennzeichnet, daß ein am Ausziehende des Schiebers (2) angebrachtes Griffstück (12) einen Einführschlitz od.dgl. zur Aufnahme und Fixierung des Endes (11) des Niederhalters (8) bei in den Kasten eingeschobenem Schieber aufweist.

4.     Sichtpackung nach einem der Ansprüche 1 bis 3, dadurch gekennzeichnet, daß der Aufnehmer von einem über den flach ausgebildeten Kastenboden (3) verschiebbaren zungenartigen Vorsprung (20) des Schieberbodens (15) gebildet ist, der eine zur Auflagefläche des Schieberbodens für den Bilderstapel (25) ansteigende Keilfläche (27) aufweist und dem am Einführende des Schiebers von den Schieberseitenwänden (23) vorragende Leitstücke (24) zugeordnet sind, die die Querseite des Bilderstapels begrenzen und zwischen deren Unterseiten und dem Kasten- bzw. Schieberboden Einführschlitze für die Seitenränder des aufgenommenen Bildes freigelassen sind.

5.     Sichtpackung nach Anspruch 4, dadurch gekennzeichnet, daß die Unterseiten der Leitstücke (24) gegensinnig zum zungenartigen Vorsprung (20) des Schieberbodens (15) abgeschrägt sind und mit Randstücken (21) der Zunge einen an der engsten Stelle etwa Bilddicke aufweisenden Einlaßspalt bestimmen.

6.     Sichtpackung nach Anspruch 5, dadurch gekennzeichnet, daß der zungenartige Vorsprung zwischen einem breiten Mittelstück (20) und den Randstücken (21) Ausschnitte (22) aufweist.

7.     Sichtpackung nach einem der Ansprüche 1 bis 6, dadurch gekennzeichnet, daß die nach oben gerichteten Seiten (29) der Leitstücke (24) mit dem Niederhalter (8) Randführungen für das abgezogene Bild und zugleich Anschläge zur Begrenzung der Schwenkbewegung des Niederhalters bilden.

8.     Sichtpackung nach einem der Ansprüche 1 bis 7, dadurch gekennzeichnet, daß das vom Ausziehende des Kastens abweisende Kastenende einen Anschlag (7) für den hinteren Rand des abgezogenen Bildes (25a) und Ausnehmungen zur versenkten Aufnahme des zungenartigen Vorsprunges (20) und der Leitstücke (24) aufweist.

0264518

IV  *FIG.1*

1

5

5a

12

2

18

*FIG. 2*  IV

24  4  23  1

9

6

7

24  14  8  4  23

10

28

2

12

11

0264518

## FIG.3

## FIG.4

0264518

FIG.5

FIG.6

0264518

## FIG.7

23  24  28  25a  1  15  5  8  25  24  23

4

4

21  22  27  3  20  22  21

## FIG.8

1  25a  8  29  25  5  10  28  11

23  24  27  20  3  15

## FIG.9

1  9  25a  24  29  8  5  25

6

7  3  23  27  20  15

**Europäisches Patentamt**

**0264518**

Nummer der Anmeldung

# EUROPÄISCHER RECHERCHENBERICHT

EP 86 89 0339

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | WO-A-8 603 027 (LICINVEST) <br> * Figuren 1-6 * <br><br> --- | 1 | G 03 B 23/02 |
| D,A | EP-A-0 113 057 (LICINVEST) <br> * Figuren 1, 2, 6, 14, 15 * <br><br> --- | 1 | |
| D,A | DE-B-2 745 214 (LICINVEST) <br> * Figuren 2, 5, 6 * <br><br> --- | 1 | |
| D,A | DE-C-3 014 394 (REFLECTA) <br> * Figur 2 * <br><br> ----- | 1 | |

RECHERCHIERTE
SACHGEBIETE (Int. Cl.4)

G 02 B 27/00
G 03 B 21/00
G 03 B 23/00
G 09 F 11/00

Der vorliegende Recherchenbericht wurde für alle Patentansprüche erstellt.

| Recherchenort <br> BERLIN | Abschlußdatum der Recherche <br> 02-07-1987 | Prüfer <br> HOPPE H |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Grunden angeführtes Dokument

& : Mitglied der gleichen Patentfamilie, übereinstimmendes Dokument

EPA Form 1503 03 82